Europäisches Patentamt

European Patent Office

Office européen des brevets

(11) Publication number: **0 092 408**
**B1**

(12) **EUROPEAN PATENT SPECIFICATION**

(45) Date of publication of patent specification: **23.11.88**

(21) Application number: **83302163.7**

(22) Date of filing: **18.04.83**

(51) Int. Cl.⁴: **A 01 K 11/00**

(54) Ear tag and pliers.

(30) Priority: **20.04.82 GB 8211444**

(43) Date of publication of application:
**26.10.83 Bulletin 83/43**

(45) Publication of the grant of the patent:
**23.11.88 Bulletin 88/47**

(84) Designated Contracting States:
**AT BE CH DE FR IT LI NL SE**

(56) References cited:
**EP-A-0 047 697**
**FR-A-2 321 982**
**FR-A-2 464 642**
**GB-A- 989 023**

(73) Proprietor: **Caisley, Roy**
**Am Kreuzberg 14**
**D-4294 Isselburg-Vehlingen (DE)**

(72) Inventor: **Frölich, Karl**
**Gerling Platz 7**
**D-4300 Essen (DE)**

(74) Representative: **Brooks, Nigel Samuel**
**Hill Hampton East Meon**
**Petersfield Hampshire GU32 1QN (GB)**

Courier Press, Leamington Spa, England.

## Description

The present invention relates to an ear tag for marking an animal and to a pair of pliers for applying the ear tag.

Conventional ear tags for identifying animals are generally made in two parts and constructed so that the two parts can be applied to opposite sides of an animal's ear. Normally the two parts are constructed so that in some manner, they interlock, once a hole has been punched through the ear. This can be effected by using pliers. Normally the first part of the tag is constructed with a pointed pin which makes the hole in the ear, and then locates in an aperture in the second part of the tag, when the pliers are closed.

These 'two piece' tags, including two buttons, have been known for some time. They are either constructed of rigid material which may be hard plastics material or metal. Such a tag is described in British Patent No. 894,143. Alternatively the tag may be of flexible material normally soft plastics material.

An advantage of buttons made of rigid material is that they are easy to apply with pliers. A pointed pin is strongly and rigidly fixed to the first button and its point does not therefore need to be specially guided through the ear and into the aperture of the second button, since the flat underside of the stiff button has a comparatively large area and aligns the point by cooperation with the supporting jaw of the pliers. Also, the pointed pin is strong enough to punch the hole in the ear without other assistance, when the pliers are closed. However a strong disadvantage of buttons made of rigid material is that by being rigid and necessarily of a flat or disc shape, they become easily caught on barb wire or fences for instance, where the hard flat surfaces cannot come free. The buttons then break, or actually tear from the ear, causing injury to the animal. In both cases the animal is also no longer marked.

A pair of pliers for the application of metallic identification tags described in GB-A-983,219 is disclosed in GB-A-989,023. The ear tag has a first button and an attached pin and a second button, the first button having a boss on its side remote from a point of the pin. The pliers comprise a pair of jaws held apart by a pliers spring, the first jaw being adapted to support the first button and the pin during application of the ear tag, and the second jaw being adapted to support the second button, the first jaw having a recess complementary to a protrusion on the first button comprised of the boss and part of the pin, in use the recess engaging the periphery and outer face of the protrusion for orienting the pin to engage in the second button on application of the tag, the first jaw also including means for pressing on the first button and attached pin to urge the protrusion into the recess, and the second jaw including means for pressing on the second button to urge it into engagement with the second jaw, each of the button pressing means also being capable of movement away from its jaw. The pin is metallic and requires tapered recesses to receive it. The button pressing means are leaf springs attached to the respective jaws and are without limit of movement away from their jaws. When the application is complete, the tag on the ear of an animal must be removed from the pliers. The pliers are released and a spring tends to open the jaws. As the buttons are secured to the metallic pin, the pointed ends have to be withdrawn from their recesses to allow the tag and the animal to escape from the pliers. Unless the release of the pointed ends takes place simultaneously, the unreleased end may remain in its recess and the pliers remain connected to the ear of the animal with possible loss of the pliers or damage to the animal.

An advantage of buttons made of flexible material is that the risk of the buttons becoming caught on fences is greatly reduced. The flexible nature of the button allows the part which is snagged, to bend or 'give' so that it comes free without damage. However a strong disadvantage of this type of ear button is the well known difficulty in applying the button to the ear of the animal. As the material is flexible, it is difficult to adequately guide the pointed part so that it locates directly in the female part of the second button. Further, nor in the first place can the pointed part, without being given assistance, be made to punch the hole in the ear of the animal.

Two types of pliers are known for applying these flexible buttons. The first known type, described in British Patent No. 1394268, is constructed with a rigid metal rod affixed on one of the opposed faces of the jaws of the pliers. This rod is pushed through the pointed pin of the male part of the button and the rigid rod then performs the function of guiding the male button in the correct direction and gives stability for punching the hole. These rods may be pointed or be of blunt form depending on the construction of the male part of the button.

A disadvantage of this fixed rod system is that after the button has been applied to the ear, the rigid rod affixed to the jaw of the pliers has to be withdrawn from the male button. This is in a direction at right angles to that at which the animal normally pulls away from the user. The animal is in pain and always moves violently. Thus, the removal of the tag (and ear) from the pliers is difficult and hazardous.

The second known type of pliers, described in GB-A-1485847, for applying buttons made of flexible material utilizes a detachable rigid metal rod inserted in the first part of the tag, leaving the rod protruding from the back of the first button. This first-male-part and the rod are then located on a first jaw of the pliers with the rod locating in a hole in the jaw. The rod then gives the necessary guidance to the button as with the first type of pliers.

A disadvantage of the detachable rod system is that after the tag has been applied, the rod may not come easily free from the jaw of the pliers and in any event, after this, the metal rod must be immediately removed from the tag. The removal of the metal rod is not without difficulty or danger, as all animals on feeling the pain after having ears pierced are nervous and frightened and the larger animals i.e. cattle and pigs cannot readily be held securely enough for the pin to be grasped and pulled out.

The first aspect of this invention relates to the provision of application pliers for an ear tag comprising a pin of hard plastics material and buttons of flexible plastics material, the pliers having means for limiting the movement of button pressing means away from their jaws to ensure that the opening of the plier jaws is minimal yet ensuring the release of the buttons from the recesses on both jaws, so that the tag on the animal can be readily removed from the pliers. Accordingly, the invention provides a pair of ear-tag application pliers for applying an ear tag to an animal's ear, the ear tag having a first button and an attached pin and a second button, the first button having a boss on its side remote from a point of the pin, the pliers comprising a pair of jaws held apart by a pliers spring, the first jaw being adapted to support the first button and the pin during application of the ear tag, and the second jaw being adapted to support the second button, the first jaw having a recess complementary to a protrusion on the first button comprised of the boss and part of the pin, in use the recess engaging the periphery and outer face of the protrusion for orienting the pin to engage in the second button on application of the tag, the first jaw also including means for pressing on the first button and attached pin to urge the protrusion into the recess, and the second jaw including means for pressing on the second button to urge it into engagement with the second jaw, each of the button pressing means also being capable of movement away from its jaw, characterised in that the buttons are of flexible plastics material, the pin is of hard plastics material, each button pressing means is guided for movement transversely of its jaw, and the movement of the button pressing means is limited by engagement of part thereof with its respective jaw, whereby when, on release of the jaws after application of the ear tag, the jaws open under the influence of the pliers spring, the connected buttons of the ear tag move the button pressing means to their limits, whereafter the tag is forcibly removed from both jaws.

The alignment of the pin may be further assured by provision of guiding means in the pressing means for guiding of the pin. Preferably the guiding means is a U-shaped slot engageable at the bottom of the U around half the periphery of the pin adjacent the first button, the U being open towards the free end of the first jaw.

The advantages of flexible buttons can be achieved by using a rigid pin between two flexible buttons. Such a tag was proposed in GB-A-1320454 and more recently in EP-A-0031227. However such tags suffer from problems of alignment of the rigid pin with the aperture in the second button, into which the head of the pin must pass after piercing the animal's ear. For aiding alignment it was found necessary with the tag described in EP-A-0031227 to use the disadvantageous rigid metal rod fixed in the pliers as in GB-A-1394268. A further proposal is described in GB-A-1372769 where rigid plastic buttons are used in conjunction with a rigid plastic pin. The pin is pivotally connected to the first button. This pivotal connection compounds the difficulty of applying this tag to an animal's ear. Yet a further three-part tag is described in FR-A-2,464,642. The tag comprises a first button of flexible plastics material, a pin of rigid plastics material to which the first button is attached prior to application of the tag, the pin having a heel portion at the first button end thereof and a point at the second button end thereof, and the first button has a boss on its side remote from the point of the pin, which boss includes a seat on which the heel portion of the pin registers. The pin has a blind axial bore opening through the first button end thereof. Application of the tag is stated to be by means of pliers, but no description of these is given. Reference to GB-A-2,062,552 corresponding to FR-A-2,464,642, reveals that the pair of pliers has one jaw with a pin receivable in the blind axial bore, so that this tag is one which requires a special pair of pliers which must open its jaws sufficiently to release the pin on one jaw from the blind axial bores in the pin of the tag. None of these three-part tags have been widely used in contrast to the two-part tags having metal stiffening rods.

The object of the second aspect of the present invention is to provide a three-part tag, with which the problem of alignment on application is alleviated.

Accordingly, the invention provides an ear tag comprising a first button of flexible plastics material, a pin of rigid plastics material to which the first button is attached prior to application of the tag, the pin having a heel portion at the first-button end of the pin, a second button of flexible plastics material which is separate from the pin prior to application of the tag, the pin having a heel portion at the first button end thereof and a point at the second button end thereof, and the first button has a boss on its side remote from the point of the pin, which boss includes a seat on which the heel portion of the pin registers, and the boss and the heel portion co-operate to provide a protrusion, characterised in that the heel portion of the pin is solid, and the protrusion formed by the boss and heel portion is shallow and complementary to and engageable in the recess in the first jaw of the application pliers to orient the pin via the engagement of the periphery and outer face of the protrusion with the sides and bottom face respectively of the recess so that, during application the point of the pin is oriented to engage in the second button, and, after application, the connected buttons move the button pressing means to their limits, whereafter the tag is forcibly removed from both jaws.

Preferably the boss includes an annular rim which peripherally surrounds the heel portion, pressed firmly onto the seat, the outer surfaces of the heel portion and of the annular rim being flush. The advantage of the annular rim, flush with the outer surface of the heel portion, is that the effective diameter of the heel portion for the purposes of alignment of the pin is increased. At the same time the actual diameter of the heel portion can be reduced to not much greater than the diameter of the shank of the pin. This in turn is of advantage in avoiding the heel portion of the pin becoming caught in fence wire. A further advantage of the annualar rim of the boss is that it protects the hard heel portion from abrasion against walls.

Furthermore it is advantageous if the pin is a tight radial fit in the first button where it passes through it and in the annular rim, where provided. This tight radial fit causes the material of the boss to be compressed if for any reason the pin is misaligned when in the recess in the jaw. The boss material being resilient, the pin tends to become realigned.

The invention has the advantage of enabling flexible-button ear tags to be used without a steel stiffening pin. Further, positive removal of the assembled tag therefrom ensures that the tag can be quickly released from the pliers once it has been assembled to the ear. Thus the animal is quickly released and the whole application of the ear tag can be quick and humane.

To help understanding of the invention, an ear tag and a pair of ear-tag pliers in accordance with the invention are now described with reference to the accompanying drawings in which;

Figure 1 is a plan view of an initially free second button of the tag,

Figure 2 is a plan view of the first button initially attached to its pin,

Figure 3 is a sectional view on the line III-III in Figure 2,

Figure 4 is a view similar to Figure 3 of the tag assembled and applied to an ear,

Figure 5 is a side view of the pliers with the tag ready for assembly,

Figure 6 is a similar view showing the pliers closed to the point of assembly,

Figure 7 is a further similar view showing the pliers released for withdrawal of the assembled tag, and

Figures 8 and 9 are scrap views in the directions of arrows VIII and IX in Figure 7 showing the position of the buttons on the pliers.

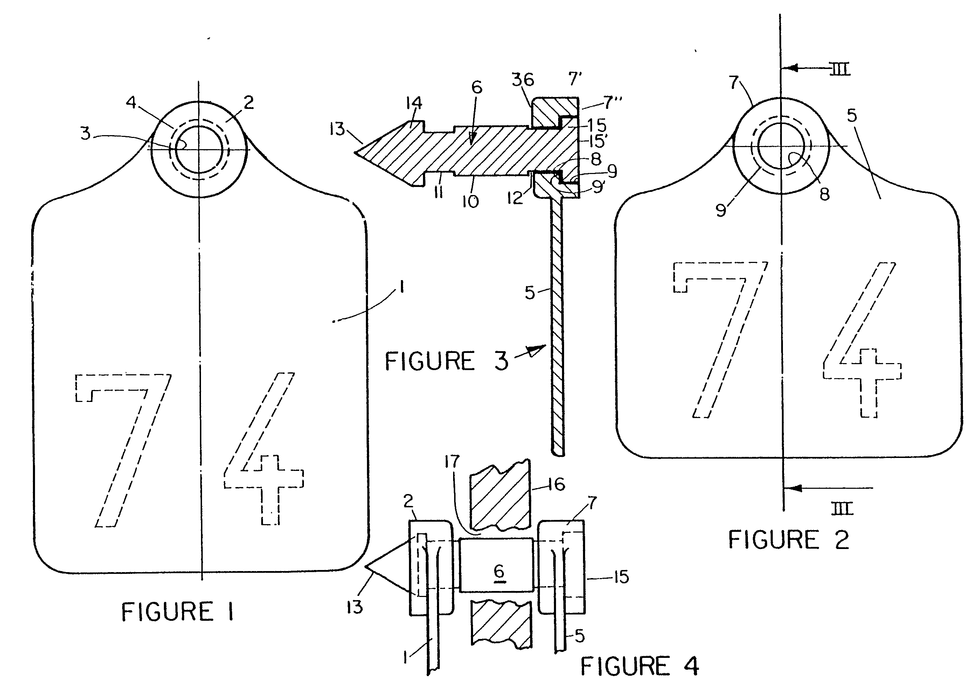

Referring first to Figures 1 to 4 the initially free second button 1 has a boss 2 with an aperture 3 having a larger diameter mouth 4 on one side. The first button 5 having the pin 6 initially attached has a similar boss 7, aperture 8 and mouth 9. The pin 6 has a shank 10 provided with circumferential grooves 11, 12 at either end. A point 13 is provided at one end with a head 14 of larger diameter than the shank 10, and a heel disc 15 is provided at the other end with a diameter the same as that of the head 14. The buttons 1, 5 are of relatively soft plastics material normally of polyurethane whereas the pin 6 is of relatively hard plastics material normally of polycarbonate.

Initially the pin 6 is attached to the first button 5 by being forced in until the heel 15 occupies the mouth 9 and the button material at the aperture 8 occupies the groove 12. The button material is a snug tight fit on the pin both at the groove 12 and where the annular rim 7' of the boss 7 peripherally surrounds the heel 15. With the heel 15 firmly registering on the seat 9' in the mouth 9, the outer face of the annular rim 7'' and the outer face of the heel 15' are flush.

On assembly on to an ear 16, the point 13 pierces a hole 17 in the ear and is forced through the aperture 3 in the initially free second button until the head 14 occupies the mouth 4 and the button material at the aperture 3 occupies the groove 11. Engagement of the head 14 and heel 15 in the mouths 4, 9 ensures that the tag does not become dis-assembled in use.

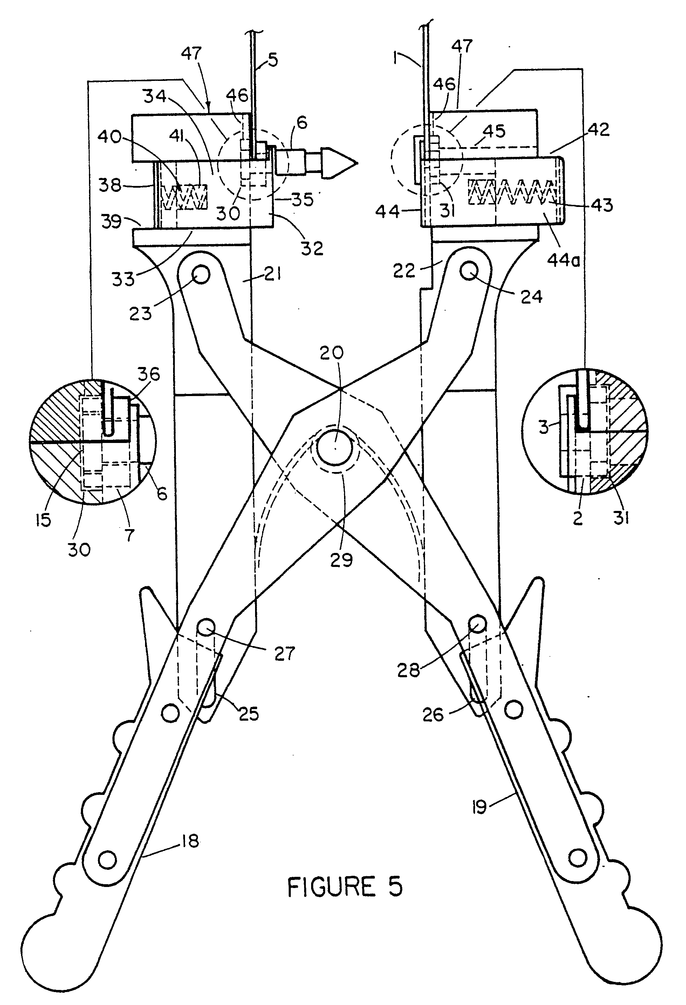

Turning now to Figure 5, the pliers are of the parallel action type. Handles 18, 19 are pivoted together at pivot pin 20 and pivoted to respective first and second jaws 21, 22 at pivot pins 23, 24. The handle ends of the jaws have grooves 25, 26 receiving pins 27, 28 fixed in the handles at the same radius from the pivot pin 20 as the pivot pins 23, 24 whereby the jaws 21, 22 remain parallel as the handles are closed. A strong main spring 29 is provided around the pivot pin 20 to urge the jaws 21, 22 apart on release of the handles.

The free ends of the jaws are adapted to hold the buttons 1, 5. Each jaw has a shallow recess 30, 31 dimensioned in depth and diameter to receive the bosses 2, 7. The recess 30 in the first jaw 21 is flat bottomed for receiving the flush outer faces 7'', 15' of the boss 7 and heel 15 whereby the pin 6 is oriented to point directly at the aperture 3 in the button 1 held on the second jaw 22. A pressure clip 32 is provided to retain the button 5 and pin 6 in position. The clip 32 is in the form of a strap surrounding the jaw 21. Side grooves 33 in the jaws guide sides 34 of the clip for movement transversely of the jaw, towards or away from the jaw 22. The sides 34 are bridged by an abutment plate 35 which extends partially across the recess 30 and which in use abuts the inside surface 36 of the boss 7. A cut-out 37 in the plate 35 is dimensioned to fit snugly half-way around the shank 10, see Figure 8. The sides 34 of the clip are turned in at 38 into a cross-cut 39 at the back of the jaw 21 and captivate a compression spring 40 located in a recess 41 in the jaw 21. The spring 40 acts to urge the abutment plate 35 towards the recess 30 whereby the protrusion formed by the boss 7 and the heel 15 of the pin is urged into firm contact with the flat bottom of the recess 30 and the pin is held in its correct orientation. This orientation is further ensured by engagement of the cut-out 37 with the shank 10.

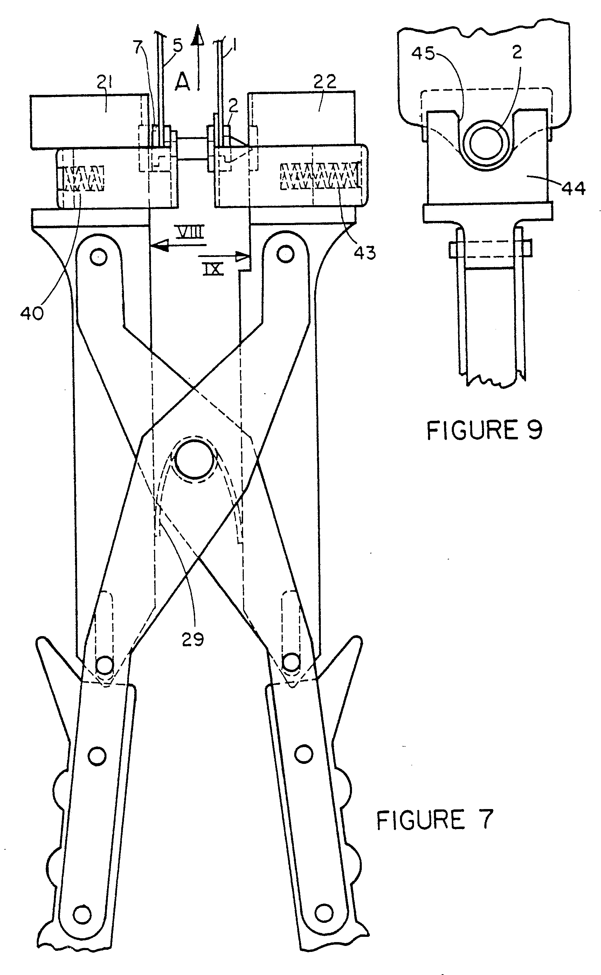

A similar pressure clip 42, with a spring 43, is provided on the jaw 22 for retaining the button 1. There are the minor differences that the abutment plate 44 of the clip 42 engages on the flat of the button 1 around its boss 2, thus the cut-out 45, see Figure 9, is larger than the cut-out 37; and that spring 43 is longer than the spring 40 and the sides 44a are longer than the sides 34 to allow a longer stroke of the clip 42 for clearing the point 13, see below. The recess 31 does not have a flat bottom but is continued at a smaller diameter 45 to accommodate the point 13. Orientation of the second button 1 is less critical than that of the first button 5 and pin 6, nevertheless clip 42 securely holds the button 1 with its boss 2 in the recess 31. However the recess 31 forms a sufficiently wide step to support the boss 2 when the point 13 is forced through the aperture 3.

For mounting the buttons to their positions shown in Figure 5 guides 46 in the opposed surfaces of the jaws at their remote ends 47 are provided for guiding the bosses back into the shallow recesses 30, 31 on axial insertion of the buttons from the remote ends 47 of the jaws when clips 32, 42 are pulled in against their springs 40, 43. In order for the recesses to be effective, the guides are shallower even than the recesses. When mounted, the flats of the buttons lie, against the opposed faces of the jaws.

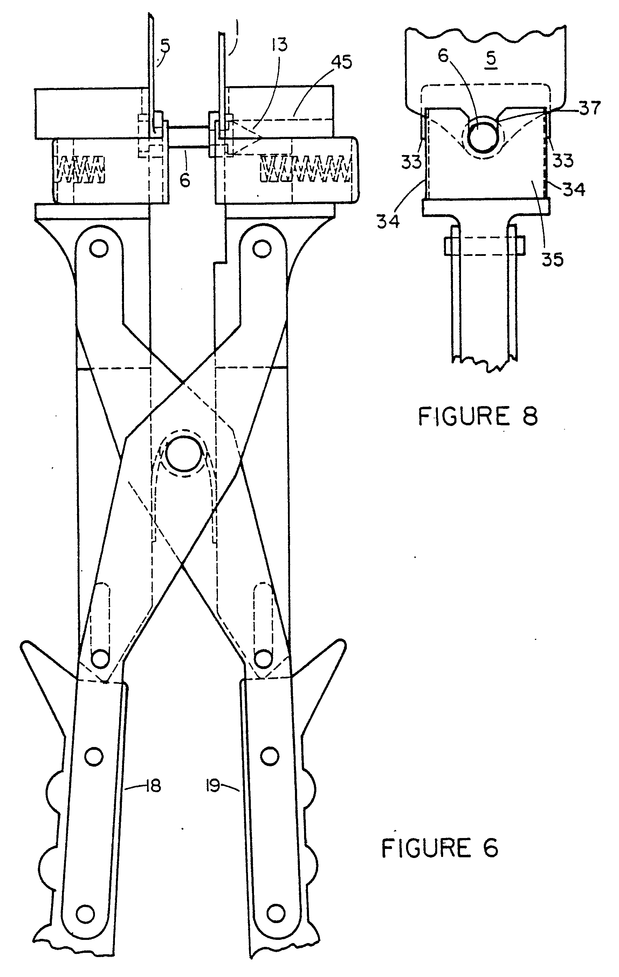

Figure 6 shows the handles 18, 19 having been closed to their position where the point 13 has passed through the aperture 3 and the buttons are assembled together, the point 13 having entered into the bore 45.

Figure 7 shows the position at which the assembled tag is free to move axially of the jaws in the direction of the arrow A on release of the handles. The main spring 29 overcomes the compression springs 40, 43 whereby the jaws 21, 22 are pulled away from the buttons 5, 1 with the bosses 7, 2 leaving the recesses 30, 31. The second button 1 has to move further transversely of the second jaw 22 than the first button 5 before being free to move axially because the point 13 has to clear the recess 31.

The invention is not intended to be restricted to the details of the above specific emodiment. For instance the end surface of the disc 15 and the bottom of the recess 30 need not both be flat provided that they co-operate to correctly orient the pin 6.

A further advantage of the particular shape of the cut-out 37 is that it abuts the shank 10 at both sides, and thus provides lateral guidance for the point 13. Lateral alignment of the point 13 with the aperture 8 is relatively more difficult to achieve than alignment longitudinally of the jaws.

## Claims

1. A pair of ear-tag application pliers for applying an ear tag to an animal's ear, the ear tag having a first button (5) and an attached pin (6) and a second button (1), the first button (5) having a boss (7) on its side remote from a point (13) of the pin, the pliers comprising a pair of jaws (21, 22) held apart by a pliers spring (29), the first jaw (21) being adapted to support the first button (5) and the pin during application of the ear tag, and the second jaw (22) being adapted to support the second button (1), the first jaw having a recess (30) complementary to a protrusion (7, 15) on the first button (5) comprised of the boss (7) and part (15) of the pin (6), in use the recess (30) engaging the periphery and outer face of the protrusion for orienting the pin (6) to engage in the second button (1) on application of the tag, the first jaw (21) also including means (32) for pressing on the first button (5) and attached pin (60) to urge the protrusion (7, 15) into the recess (30), and the second jaw (22) including means (42) for pressing on the second button (1) to urge it into engagement with the second jaw (22), each of the button pressing means (32, 42) also being capable of movement away from its jaw (21, 22), characterised in that the buttons (5, 1) are of flexible plastics material, the pin (6) is of hard plastics material, each button pressing means is guided for movement transversely of its jaw, and the movement of the button pressing means is limited by engagement of part thereof with its respective jaw, whereby when, on release of the jaws after application of the ear tag, the jaws (21, 22) open under the influence of the pliers spring (29), the connected buttons (1, 5) of the ear tag move the button pressing means to their limits, whereafter the tag is forceably removed from both jaws.

2. Pliers as claimed in claim 1, characterised in that the two button pressing means (32, 42) each comprise a strap (32, 42) encircling the respective jaw and a spring (40, 43) urging the strap away from the opposite jaw, the portion of the strap on the face of the jaw nearest the other jaw being adapted to engage the respective button and the portion (38) of the strap on the opposite face of the jaw abutting the jaw when the pliers are released after application to remove the tag from the jaws.

3. Pliers as claimed in claim 2, characterised in that the jaws are provided with side grooves (33) for guiding the straps for movement laterally of the jaws.

4. Pliers as claimed in claim 1, claim 2 or claim 3, characterised in that the second jaw (22) has a shallow recess (31) for engaging a boss (2) on the second button (1) and an axially extending groove (47) is provided in the opposed face of each jaw for initial guiding of the buttons (5, 1) into engagement in the respective shallow recesses (30, 31).

5. Pliers as claimed in any preceding claim, characterised in that the pressing means (32) includes guiding means (37) for guiding the pin (6) to engage in the second button (1) further to the orientation provided by the protrusion (7, 15) and the recess (30).

6. Pliers as claimed in claim 5, characterised in that wherein the guiding means (37) is a U-shaped slot (37) engageable at the bottom of the U around half the periphery of the pin (6) adjacent the first button (5), the U being open towards the free end (47) of the first jaw (21).

7. Pliers as claimed in any preceding claim, characterised in that the jaws (21, 22) are maintained parallel with each other during use.

8. An ear tag for marking an animal by application to the animal's ear with a pair of application pliers according to any of claims 1 to 7, the tag comprising a first button (5) of flexible plastics material, a pin (6) of rigid plastics material to which the first button (5) is attached prior to application of the tag, a second button (1) of flexible plastics material which is separate from the pin (6) prior to application of the tag, the pin (6) having a heel portion (15) at the first button end thereof and a point (13) at the second button end thereof, and the first button (5) has a boss (7) on its side remote from the point (13) of the pin, which boss (7) includes a seat (9) on which the heel portion (15) of the pin registers, and the boss (7) and the heel portion (15) co-operate to provide a protrusion, characterised in that the heel portion (15) of the pin (6) is solid, and the protrusion formed by the boss (7) and heel portion (15) is shallow and complementary to and engageable in the recess (30) in the first jaw (21) of the application pliers to orient the pin via the engagement of the periphery and outer face of the protrusion (7, 15) with the sides and bottom face respectively of the recess (30) so that, during application, the point (13) of the pin (6) is oriented to engage in the second button (1), and, after application, the connected buttons (5, 1) move the button pressing means (32, 42) to their limits, whereafter the tag is forceably removed from both jaws (21, 22).

9. An ear tag as claimed in claim 8, characterised in that the boss (7) includes an annular rim which peripherally surrounds the heel portion pressed firmly onto the seat, the outer surfaces of the heel portion and of the annular rim being flush.

10. An ear tag as claimed in claim 9, characterised in that the pin (6) is a tight radial fit in the first button (5) where it passes through the first button and in the annular rim.

11. An ear tag as claimed in claim 8, claim 9 or claim 10, for marking an animal by application to the animal's ear with a pair of application pliers as claimed in claim 4, or any of claims 5, 6 and 7, when appendant to claim 4, characterised in that the second button (1) of the ear tag has a boss (2) similar to that of the first button (5), which boss (2) is complementary to and engageable in the recess (31) in the second jaw (22) of the application pliers and which, when therein, is on the side of the second button (1) remote from the first button (5).

**Patentansprüche**

1. Ohrmarkenzange zur Anbringung einer Ohrmarke an einem Tierohr, die Ohrmarke umfaßt eine erste Lasche (5) und einen angebrachten Stift (6) und eine zweite Lasche (1), wobei die erste Lasche (5) an ihrer einer Spitze (13) des Stiftes abgewandten Seite ein nabenartiges Auge (7) aufweist; die Zange umfaßt ein Paar von Backen (21, 22), die durch eine Zangenfeder (29) auseinandergehalten werden; die erste Backe (21) ist geeignet, die erste Lasche (5) und den Stift (6) während der Anbringung der Ohrmarke zu halten und die zweite Backe (22) ist geeignet, die zweite Lasche (1) zu halten; die erste Backe besitzt eine Ausnehmung (30), die komplementär zu einem Vorsprung (7, 15) an der ersten Lasche (5) ist, welcher das Auge (7) und einen Teil (15) des Stiftes (6) umfaßt; beim Gebrauch nimmt die Ausnehmung (30) die Umfangs- und Außenfläche des Vorsprunges eng auf, um den Stift (6) für einen Eingriff in die zweite Lasche (1) bei der Anbringung der Ohrmarke auszurichten; die erste Backe (21) weist ferner eine Einrichtung (32) zum Andrücken der ersten Lasche (5) und des angebrachten Stiftes (6) auf, um den Vorsprung (7, 15) in die Ausnehmung (30) zu drücken und die zweite Backe (22) weist eine Einrichtung (42) zum Andrücken der zweiten Lasche (1) auf, um diese in Eingriff mit der zweiten Backe (22) zu drücken, wobei jede der Laschenandrückeinrichtungen (32, 42) auch in der Lage ist, sich von ihrer Backe (21, 22) wegzubewegen, dadurch gekennzeichnet, daß die Laschen (5, 1) aus flexiblem Kunststoffmaterial bestehen, daß der Stift (6) aus hartem Kunststoffmaterial besteht, daß jede Laschenandrückeinrichtung für eine Bewegung quer zu ihrer Backe geführt ist und daß die Bewegung der Laschenandrückeinrichtungen durch Anschlagen eines Teiles von ihnen auf ihre jeweilige Backe begrenzt ist, wodurch dann, wenn bei Freigabe der Backen nach Anbringung der Ohrmarke die Backen sich unter dem Einfluß der Zangenfeder (29) öffnen, die verbundenen Laschen (1, 5) der Ohrmarke die Laschenandrückeinrichtungen an ihre Anschläge bewegen, wonach die Marke von beiden Backen mit Kraft entfernt wird.

2. Zange nach Anspruch 1, dadurch gekennzeichnet, daß die Laschenandrückeinrichtungen (32, 42) jeweils ein die jeweilige Backe umgreifendes Band (32, 42) und eine das Band weg von der gegenüberliegenden Backe belastende Feder (40, 43) aufweisen, daß der Teil des Bandes auf derjenigen Backenfläche, welche der anderen Backe nächstliegt, geeignet ist, um an der jeweiligen Lasche anzugreifen, und daß der Teil (38) des Bandes, welcher an der entgegengesetzten Backenfläche liegt, an die Backe anschlägt, wenn die Zange nach Anbringung freigegeben wird, um die Ohrmarke von den Backen zu entfernen.

3. Zange nach Anspruch 2, dadurch gekennzeichnet, daß die Backen mit Seitennuten (33) zur Führung der Bänder für eine Bewegung seitlich zu den Backen versehen sind.

4. Zange nach einem der Ansprüche 1, 2 oder 3, dadurch gekennzeichnet, daß die zweite Backe (22) eine flache Ausnehmung (31) zum Angriff an einem nabenartigen Auge (2) an der zweiten Lasche (1) besitzt und daß eine axial sich erstreckende Nut (47) in den sich gegenüberliegenden Flächen jeder Backe vorgesehen ist, um anfänglich die Laschen (5, 1) in Eingriff mit der jeweiligen flachen Ausnehmung (30, 31) zu bringen.

5. Zange nach einem der vorangegangenen Ansprüche, dadurch gekennzeichnet, daß die Andrückeinrichtung (32) ein Führungsmittel (37) zur Führung des Stiftes (6) für ein Eingreifen in die zweite Lasche (1) aufweist, das zusätzlich zu der durch den Vorsprung (7, 15) und die Ausnehmung (30) bewirkten Ausrichtung vorgesehen ist.

6. Zange nach Anspruch 5, dadurch gekennzeichnet, daß das Führungsmittel ein U-förmiger Schlitz (37) ist, welcher mit dem Boden des U's um den halben Umfang des Stiftes (6) neben der Lasche (5) angreift, wobei das U zu dem freien Ende (47) der ersten Backe (21) hin offen ist.

7. Zange nach einem vorangegangenen Anspruch, dadurch gekennzeichnet, daß die Backen (21, 22) während des Gebrauches parallel zueinander gehalten sind.

8. Ohrmarke, welche zur Markierung eines Tieres mittels einer Anbringungszange nach einem der Ansprüche 1 bis 7 an einem Tierohr anzubringen ist, wobei die Marke eine erste Lasche (5) aus flexiblem Kunststoffmaterial, einen Stift (6) aus hartem Kunststoffmaterial, welcher an der ersten Lasche (5) zur Anbringung der Marke befestigt wird, und eine zweite Lasche (1) aus flexiblem Kunststoffmaterial aufweist, welche vom Stift (6) vor der Anbringung der Marke getrennt ist; der Stift (6) besitzt einen Fußteil (15) an seinem Ende für die erste Lasche und eine Spitze (13) an seinem Ende für die zweite Lasche, und die erste Lasche (5) besitzt ein nabenförmiges Auge (7) an ihrer von der Spitze (13) des Stiftes abgewandten Seite, wobei das Auge (7) einen Sitz (9) umfaßt, in den der Fußteil (15) des Stiftes paßt, und wobei das Auge (7) und der Fußteil (15) zusammenwirken, um einen Vorsprung zu bilden, dadurch gekennzeichnet, daß der Fußteil (15) des Stiftes (6) massiv ist und daß der vom Auge (7) und dem Fußteil (15) gebildete Vorsprung flach und komplementär und einfügbar in die Ausnehmung (30) in der ersten Backe (21) der Anbringungszange ist, um den Stift durch die Einfassung am Umfang und an der äußeren Stirnseite des Vorsprunges (7, 15) mittels der Seiten- bzw. der Bodenfläche der Ausnehmung (30) so auszurichten, daß während der Anbringung die Spitze (13) des Stiftes (6) für einen Eingriff in die zweite Lasche (1) ausgerichtet ist und daß nach der Anbringung die verbundenen Laschen (5, 1) die Laschenandrückeinrichtungen (32, 42) an ihre Anschläge bewegen, wonach die Marke mit Kraft von den beiden Backen (21, 22) entfernt wird.

9. Ohrmarke nach Anspruch 8, dadurch gekennzeichnet, daß das Auge (7) einen ringförmigen Rand aufweist, welcher den in den Sitz fest eingepreßten Fußteil (15) umfangsmäßig umschließt, wobei die Stirnflächen des ringförmigen Randes und des Fußteiles (15) bündig sind.

10. Ohrmarke nach Anspruch 9, dadurch gekennzeichnet, daß der Stift (6) dort, wo er durch die erste Lasche hindurchgeht, und innerhalb des ringförmigen Randes in einer strammen radialen Passung in der ersten Lasche (5) sitzt.

11. Ohrmarke nach Anspruch 8, 9 oder 10 zur Markierung eines Tieres, welche an einem Tierohr mittels einer Anbringungszange nach Anspruch 4 oder einem der Ansprüche 5, 6 und 7 bei deren Rückbeziehung auf Anspruch 4, anzubringen ist, dadurch gekennzeichnet, daß die zweite Lasche (1) der Ohrmarke ein nabenartiges Auge (2) ähnlich dem der ersten Lasche (5) aufweist, welches Auge (2) komplementär zu- und einfügbar in die Ausnehmung (31) in der zweiten Backe (22) der Anbringungszange ist und welches - nach Einfügung - sich auf derjenigen Seite der zweiten Lasche (1) befindet, die von der ersten Lasche (5) abgewandt ist.

**Revendications**

1. Paire de pinces d'application de marques d'oreille pour appliquer une marque d'oreille sur l'oreille d'un animal, la marque d'oreille comprenant un premier bouton (5) auquel est fixée une broche (6) et un second bouton (1) le premier bouton (5) ayant une bosse (7) sur son côté éloigné d'une pointe (13) de la broche, les pinces comprenant une paire de mâchoires (21, 22) maintenues écartées par un ressort de pince (29), la première mâchoire (21) étant adaptée à supporter le premier bouton (5) et la broche (6) pendant l'application de la marque d'oreille, et la seconde mâchoire (22) étant adaptée à supporter le second bouton (1), la première mâchoire présentant un évidement (30) complémentaire d'une partie en saillie (7, 15) du premier bouton (5) constituée de la bosse (7) et d'une partie (15) de la broche (6), en fonctionnement l'évidement (30) venant en prise avec la périphérie et la face extérieure de la partie en saillie pour orienter la broche (6) et l'engager dans le second bouton (1) à l'application de la marque, la première mâchoire (21) comprenant aussi un moyen (32) appuyant sur le premier bouton (5) et la broche fixée sur ce bouton (6) afin desolliciter la partie en saillie (7, 15) dans l'évidement (30), et la seconde mâchoire (22) comprenant un moyen (42) pour appuyer sur le second bouton (1) et le solliciter en prise avec la seconde mâchoire (22), chaque moyen appuyant sur les boutons (32, 42) étant aussi capables de se déplacer en s'éloignant de sa mâchoire (21, 22), caractérisée par le fait que les boutons (5, 1) sont en matière plastique souple, la broche (6) en matière plastique dure, chaque moyen appuyant sur les boutons est guidé pour se déplacer transversalement par rapport à sa mâchoire, et le mouvement des moyens appuyant sur les boutons est limité par engagement d'une partie de ces moyens avec sa mâchoire respective, de sorte que, au relâchement des mâchoires après application de la marque d'oreille, les mâchoires (21, 22) s'ouvrent sous l'effet du ressort de pince (29), les boutons connectés (1, 5) de la marque d'oreille déplacent les moyens appuyant sur les boutons jusqu'à leur limite, après quoi la marque est forcée de se dégager des deux mâchoires.

2. Pinces selon la revendication 1, caractérisées par le fait que les deux moyens appuyant sur les boutons (32, 42) comprennent chacun un étrier (32, 42) encerclant la mâchoire respective et un ressort (40, 43) sollicitant l'étrier en l'éloignant de la mâchoire opposée, la partie de l'étrier sur la face de mâchoire la plus proche de l'autre mâchoire étant adaptée à venir en prise avec le bouton correspondant et la partie (38) de l'étrier sur la face opposée de la mâchoire buttant sur la mâchoire lorsque les pinces sont relâchées après l'application pour dégager la marque des mâchoires.

3. Pinces selon la revendication 2, caractérisées par le fait que les mâchoires présentent des rainures latérales (33) pour guider les étriers dans un mouvement latéral par apport aux mâchoires.

4. Pinces selon la revendication 1, 2 ou 3, caractérisées par le fait que la seconde mâchoire (22) présente un évidement peu profond (31) pour venir enprise avec une bosse (2) sur le second bouton (1) et par le fait qu'une rainure (47) orientée dans la direction axiale est prévue sur la face opposée de chaque mâchoire pour le guidage initial des boutons (5, 1) en engagement dans les évidements peu profonds respectifs (30, 31).

5. Pinces selon l'une quelconque des revendications précédentes, caractérisées par le fait que les moyens d'appui (32) comprennent des moyens de guidage (37) pour guider la broche (6) à s'engager dans le second bouton (1) après l'orientation assurée par la partie en saillie (7, 15) et l'évidement (30).

6. Pinces selon la revendication 5, caractérisées par le fait que dans les moyens de guidage (37) se trouve une fente en forme de U (37) pouvant s'engager à la partie inférieure du U autour de la moitié de la périphérie de la broche (6) adjacente au premier bouton (5), le U étant ouvert en direction de l'extrémité libre (47) de la première mâchoire (21).

7. Pinces selon l'une quelconque des revendications précédentes, caractérisées par le fait que les mâchoires (21, 22) sont maintenues parallèles entre elles pendant l'utilisation.

8. Marque d'oreille pour marquer un animal par application à l'oreille de l'animal au moyen d'une paire de pinces d'application selon l'une des revendications 1 à 7, la marque comprenant un premier bouton (5) en matière plastique souple, une broche (6) en matière plastique rigide à laquelle est fixé le premier bouton (5) avant l'application de la marque, un second bouton (1) en matière plastique souple qui est séparé de la broche (6) avant l'application de la marque, la broche (6) comportant une partie de talon (15) à son extrémité du côté du premier bouton et une pointe (13) à son extrémité du second bouton, et le premier bouton (5) présente une bosse (7) sur son côté éloigné de la pointe (13) de la broche, laquelle bosse (7) comprend un siège (9) sur lequel la partie talon (15) de la broche s'adapte, et la bosse (7) et la partie talon (15) coopèrent pour constituer une partie en saillie, caractérisée par le fait que la partie talon (15) de la broche (6) est massive, la partie en saillie formée par la bosse (7) et la partie talon (15) est creuse et complémentaire de l'évidement (30) de la première mâchoire (21) des pinces d'application et peut être emboîtée dans ledit évidement pour orienter la broche par l'engagement de la périphérie et de la face extérieure de la partie en saillie (7, 15) avec les côtés et la face inférieure respective de l'évidement (30) afin qu'au cours de l'application, la pointe (13) de la broche (6) soit orientée pour s'engager dans le second bouton (1), et, qu'après application, les boutons connectés (5, 1) déplacent les moyens appuyant sur les boutons (32, 42) jusqu'à leur limite, après quoi la marque est dégagée à force des deux mâchoires (21, 22).

9. Marque d'oreille selon la revendication 8, caractérisée par le fait que la bosse (7) comprend un bord annulaire qui entoure la périphérie de la partie talon fortement appuyée dans le siège, les surfaces extérieures de la partie talon et du bord annulaire étant à ras l'une de l'autre.

10. Marque d'oreille selon la revendication 9, caractérisée par le fait que la broche (6) est adaptée radialement et serrée dans le premier bouton (5) à l'endroit où elle traverse le premier bouton et le bord annulaire.

11. Marque d'oreille selon l'une des revendications 8, 9 ou 10 pour marquer un animal par application sur l'oreille de l'animal au moyen d'une paire de pinces d'application selon la revendication 4 ou l'une des revendications 5, 6 et 7, considérée en combinaison avec la revendication 4, caractérisée par le fait que le second bouton (1) de la marque d'oreille présente une bosse (2) semblable à celle du premier bouton (5), cette bosse (2) étant complémentaire de l'évidement (31) de la seconde mâchoire (22) des pinces d'application et pouvant s'emboîter dans celui-ci et qui, lorsqu'elle est emboîtée dedans, se trouve sur le côté du second bouton (1) éloigné du premier bouton (5).

FIGURE 1

FIGURE 2

FIGURE 3

FIGURE 4

FIGURE 5

FIGURE 8

FIGURE 6

FIGURE 9

FIGURE 7